## Europäisches Patentamt

## European Patent Office

## Office européen des brevets

(19)

(11) **EP 1 043 482 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.⁷: **F01L 1/344**, F01L 1/352, F01L 1/34

(21) Anmeldenummer: **00890093.8**

(22) Anmeldetag: **23.03.2000**

(54) **Vorrichtung zur Verstellung einer Nockenwelle einer Brennkraftmaschine mit innerer Verbrennung**

Camshaft phaser for an internal combustion engine

Déphaseur d'arbre à cames pour moteur à combustion interne

(84) Benannte Vertragsstaaten:
**AT DE ES FR GB IT**

(30) Priorität: **23.03.1999 AT 53999**
**12.05.1999 AT 85499**

(43) Veröffentlichungstag der Anmeldung:
**11.10.2000 Patentblatt 2000/41**

(73) Patentinhaber: **TCG UNITECH Aktiengesellschaft**
**4560 Kirchdorf/Krems (AT)**

(72) Erfinder: **Heer, Siegfried**
**4560 Kirchdorf/Krems (AT)**

(74) Vertreter: **Babeluk, Michael, Dipl.-Ing. Mag. et al**
**Patentanwalt**
**Mariahilfer Gürtel 39/17**
**1150 Wien (AT)**

(56) Entgegenhaltungen:
**EP-A- 0 254 058        US-A- 3 978 829**
**US-A- 5 329 890**

**Beschreibung**

Die vorliegende Erfindung betrifft eine Vorrichtung gemäß dem Oberbegriff von Patentanspruch 1.

Um in verschiedenen Bereichen des Motorkennfeldes optimale Verbrauchs- und Abgaswerte zu erzielen, ist es erforderlich, die Ventilsteuerzeiten in Abhängigkeit verschiedener Betriebsparameter zu verändern. Eine solche Veränderung der Steuerzeiten kann in eleganter Weise durch eine Verdrehung der Nockenwelle in Bezug auf das sie antreibende Rad bewirkt werden. Die Nockenwelle einer Brennkraftmaschine wird üblicherweise durch ein Kettenrad, das mit der Kurbelwelle über eine Antriebskette verbunden ist, oder ein als Riemenscheibe ausgebildetes Antriebsrad, das über einen Zahnriemen mit der Kurbelwelle in Verbindung steht, angetrieben.

Die GB 2 221 513 A zeigt eine Verstellvorrichtung für Nockenwellen, bei der ein Elektromotor eine Gruppe von Hebeln betätigt, die die Nockenwelle gegenüber dem Antriebsrad verdrehen. Zu diesem Zweck wird ein Betätigungselement, an dem die Hebel angelenkt sind, in Axialrichtung verschoben. Eine solche Lösung ist jedoch aufwendig und aufgrund der Vielzahl von Lagern mit einem großen Spiel behaftet.

Aus der DE 41 10 088 C1 und aus der DE 39 29 619 A1 sind Verstelleinrichtungen bekannt, bei denen zwischen einem mit der Nockenwelle in Verbindung stehenden Bauteil und einem mit dem Antriebsrad in Verbindung stehenden Bauteil ein Verstellelement vorgesehen ist, das zwei Schrägverzahnungen aufweist, die mit entsprechenden Verzahnungen der Nockenwelle bzw. des Antriebsrades in Eingriff stehen. Durch eine Axialverschiebung dieses Verstellelements kann eine Verdrehung der Nockenwelle gegenüber dem Antriebsrad bewirkt werden. Eine Möglichkeit der Axialverschiebung des Verstellelements ist dabei die Betätigung durch einen Hydraulikkolben, der in Abhängigkeit von der erforderlichen Verstellung betätigt wird. Nachteilig bei dieser Lösung ist, dass zur Erzielung der erforderlichen Kräfte ein relativ großer Hydraulikkolben erforderlich ist, was einen großen baulichen Aufwand darstellt. Außerdem ist der Ölverbrauch durch die Betätigung des Kolbens relativ groß, was eine Belastung des Motors durch eine entsprechende Ölpumpe darstellt. Darüber hinaus kann bei einer solchen bekannten Vorrichtung die Nockenwelle nur zwischen zwei Endstellungen hin- und hergeschaltet werden. Ein ähnliche Lösung ist in der US 5,329,890 A beschrieben.

Weiters sind aus der DE 41 01 676 A1 und aus der DE 44 06 983 C elektrische Verstellvorrichtungen bekannt, bei denen jeweils ein Elektromotor vorgesehen ist, der über eine Gewindespindel das Verstellelement verschiebt. Da sich jedoch das Verstellelement im wesentlichen mit Nockenwellendrehzahl dreht, muss zwischen dem Elektromotor und dem Verstellelement ein Axialdrucklager vorgesehen sein, das die Relativbewegung zwischen dem verdrehfesten und dem sich drehenden Bauteil aufnimmt. Dieses Axialdrucklager ist bei der bekannten Lösung praktisch während des gesamten Motorbetriebs belastet, da durch die zwischen Antriebsrad und Nockenwelle wirkenden Torsionsmomente stets eine in Axialrichtung wirkende Kraft auf das Verstellelement ausgeübt wird. Dieses Axialdrucklager ist daher ein kritischer Bauteil, der die Lebensdauer des Motors einschränkt. Eine ähnliche Lösung ist in der DE 33 20 835 A1 beschrieben, wobei die gleichen Nachteile auftreten.

Die DE 36 07 256 A beschreibt eine Vorrichtung, bei der ein Schrittmotor zur Verstellung der Nockenwelle vorgesehen ist, der einerseits mit der Nockenwelle und andererseits mit dem Antriebsrad verbunden ist. Da dieser Schrittmotor das gesamte Antriebsmoment der Nockenwelle aufnehmen muss, ist eine solche Lösung mit vernünftigem Aufwand nicht realisierbar.

Ferner zeigt die EP 0 596 860 A eine Vorrichtung zur Verstellung der Ventilöffnungszeiten, bei der die Nokkenwelle hohl ausgeführt ist, und eine Innenwelle enthält. Die Nocken sind zweiteilig ausgeführt, wobei die einzelnen Nockenabschnitte um einen bestimmten Winkel gegeneinander verdreht werden können. Die Verdrehung der beiden Nockenabschnitte erfolgt durch einen sich mitdrehenden Elektromotor, der über Schleifringe versorgt wird. Eine ähnliche Lösung ist in der US 5,417,186 A beschrieben.

Ebenso zeigt ein älterer Vorschlag der Anmelderin, veröffentlicht in der EP-A 0 903 471, eine Nockenwellenverstelleinrichtung mit einem Planetengetriebe, bei der die Verstellung durch einen Elektromotor erfolgt, der über Schleifkontakte mit Strom versorgt wird.

Bei den meisten der oben beschriebenen Lösungen erfolgt die elektromotorische Verstellung über ein Getriebe mit einem großen Untersetzungsverhältnis, um das am Elektromotor anliegende Drehmoment in einem akzeptablen Bereich zu halten. Die Kraftübertragung über ein axial verschiebliches Element mit schraubenförmigen Verzahnungen besitzt den Vorteil, dass sehr große Untersetzungsverhältnisse relativ einfach darstellbar sind. Nachteilig bei diesen Lösungen ist jedoch, dass die Reibung relativ groß ist, und dass entsprechende Kräfte in Axialrichtung auftreten, die durch die Lager aufgenommen werden müssen. Andererseits ist die Kraftübertragung über ein Planetengetriebe relativ aufwendig, und es ist schwierig, große Untersetzungsverhältnisse zu erzielen.

Durch die Verwendung eines sogenannten Harmonic-Drive-Getriebes, wie dies etwa aus der US 3,978,829 A bekannt ist, kann in einfacher Weise ein großes Untersetzungsverhältnis erreicht werden. Wenn beispielsweise die Zähnezahl des außenverzahnten Zahnrades um zwei geringer ist, als die Zähnezahl des innenverzahnten Zahnrades, die beispielsweise 50 beträgt, so wird ein Übersetzungsverhältnis von etwa 1:25 erreicht.

Bei der konkreten Ausführung einer Vorrichtung der oben beschriebenen Art sind jedoch über die bereits beschriebenen Fragen folgende Problemkreise konstruktiv zu bewältigen: Die Lagerung des Elektromotors soll in möglichst einfacher Weise gestaltet werden, so dass auf das Harmonic-Drive-Getriebe keine unzulässig großen Beanspruchungen wirken. Weiters darf die Lagerung des Elektromotors die erforderliche Abdichtung zwischen den ölführenden Abschnitten (Nockenwelle und Getriebe) und den nicht ölführenden Abschnitten nicht behindern. Weiters ist es erforderlich, die Lagerung des Antriebsrades in möglichst einfacher Weise zu realisieren.

Eine weitere konstruktive Vorgabe besteht darin, einen Notlaufbetrieb des Motors bei ausgefallener Verstellvorrichtung zu gewährleisten und generell den Verstellbereich auf zulässige Winkel zu beschränken.

Aufgabe der vorliegenden Erfindung ist es, die eingangs beschriebene Vorrichtung in der Art weiterzubilden, dass die obigen Forderungen mit möglichst geringem Aufwand erreicht werden.

Erfindungsgemäß werden diese Aufgaben durch die Merkmale von Patentanspruch 1 gelöst. Auf diese Weise kann eine unzulässige Belastung des Harmonic-Drive-Getriebes sicher verhindert werden, da eine durch Schwingungen od. dgl. hervorgerufene Relativbewegung zwischen den einzelnen Komponenten des Harmonic-Drive-Getriebes praktisch ausgeschlossen ist. Weiters besteht eine einfache Möglichkeit, das Antriebsrad zu lagern. Durch die Größe der Ausnehmungen wird automatisch der Verstellbereich der Nockenwelle gegenüber dem Antriebsrad festgelegt. Daher ist es möglich, diesen Verstellbereich auf zulässige Werte zu begrenzen. Weiters wird durch diese Maßnahme gewährleistet, dass bei Ausfall der Verstelleinrichtung oder beim Kaltstart eine definierte Stellung der Nockenwelle gewährleistet ist. An sich ist zwar das Harmonic-Drive-Getriebes aufgrund des großen Untersetzungsverhältnisses selbsthemmend, aber durch die unvermeidlichen Drehschwingungen im System wird bei stromlosem Elektromotor praktisch sofort eine Stellung der Nockenwelle erreicht, die der spätestmöglichen Ventilöffnungszeit entspricht. Es ist daher möglich, die Motorelektronik so abzustimmen, dass unter diesen Voraussetzungen ein akzeptabler Notlaufbetrieb möglich ist.

Besonders bevorzugt ist es, wenn der Elektromotor eine Welle aufweist, die direkt mit dem elliptischen Innenring des Wälzlagers verbunden ist. Dabei ist es günstig, wenn das flexible Zahnrad des Harmonic-Drive-Getriebes direkt mit der Nockenwelle verbunden ist. In diesem Fall ist das innenverzahnte Zahnrad des Harmonic-Drive-Getriebes mit dem Antriebsrad verbunden. Auf diese Weise ist ein besonders einfacher Aufbau der erfindungsgemäßen Lösung darstellbar.

Nachteilig ist bei herkömmlichen Harmonic-Drive-Getrieben, dass aufgrund der relativ feinen Verzahnung die Belastbarkeit beschränkt ist. Insbesondere sind solche Getriebe gegenüber stoßartigen Belastungen empfindlich. Um diesen Nachteil zu vermeiden, kann das Getriebe aus folgenden Bauteilen aufgebaut sein: einer ersten Eingriffsfläche, die am inneren Umfang eines ersten Eingriffsteils angeordnet ist, einer zweiten Eingriffsfläche, die am äußeren Umfang eines flexiblen Eingriffsteils angeordnet ist und mit der ersten Eingriffsfläche in Eingriff steht, und einem zum ersten Eingriffsteil und zum flexiblen Eingriffsteil koaxialen Treibteil, an dem ein Wälzlager mit einem unrund ausgebildeten Innenring angeordnet ist, das einen flexiblen Außenring aufweist, der mit dem flexiblen Eingriffsteil verbunden ist und diesen an vorzugsweise zwei Stellen gegen den ersten Eingriffsteil drückt, wobei die erste Eingriffsfläche des ersten Eingriffsteils mit der zweiten Eingriffsfläche des flexiblen Eingriffsteils in einer reibschlüssigen Verbindung steht.

Bei einem solchen Getriebe ist zwar die eindeutige phasenmäßige Zuordnung der einzelnen Komponenten und das genaue Übersetzungsverhältnis eines Zahnradgetriebes nicht mehr gegeben, aber es kann dafür eine Unempfindlichkeit gegen Überbelastung erreicht werden, die bei einem Zahnradgetriebe nicht gegeben ist. Weiters ist das erfindungsgemäße Getriebe unempfindlich gegenüber Schmutz und anspruchslos in bezug auf Schmierung.

Ein weiterer Vorteil der Erfindung besteht darin, dass die Exzentrizität des Wave Generators deutlich geringer ausgeführt werden kann als bei einem herkömmlichen Getriebe mit Verzahnungen. Dabei ist es nämlich erforderlich, die Exzentrizität so groß zu machen, dass die Zähne der ersten und der zweiten Eingriffsfläche außerhalb der Eingriffsbereiche nicht miteinander in Konflikt kommen. Bei der erfindungsgemäßen Lösung ist die Exzentrizität nur durch den geringen Weg bestimmt, der erforderlich ist, die reibschlüssige Verbindung herzustellen. Daher ist die Verformung des flexiblen Eingriffsteils im Betrieb deutlich geringer, was die Verluste verringert und die Standzeit erhöht.

Grundsätzlich ist es möglich, dass die erste und die zweite Eingriffsfläche an einer, an zwei oder an drei oder mehr Stellen in Eingriff stehen. Als besonders günstig hat es sich jedoch herausgestellt, wenn zwei gegenüberliegende Eingriffspunkte vorgesehen sind. Bei einer solchen Lösung ist der Innenring des Wälzlagers im Querschnitt im wesentlichen elliptisch ausgebildet.

Eine sichere Kraftübertragung kann insbesondere dadurch erreicht werden, wenn die erste Eingriffsfläche kegelförmig mit kleinem Öffnungswinkel ausgebildet ist. Auf diese Weise kann auch ein allfälliger Verschleiß ausgeglichen werden. Besonders günstig ist es in diesem Zusammenhang, wenn der Öffnungswinkel zwischen 1° und 10°, vorzugsweise zwischen 2° und 6° beträgt. Der Wave Generator wird in diesem Fall vorzugsweise so ausgeführt, dass der Außenring des Wälzlagers kegelförmig mit kleinem Öffnungswinkel ausgebildet ist. Dabei sollte der Öffnungswinkel des Außenrings im wesentlichen dem der ersten Eingriffsfläche entsprechen.

Besonders vorteilhaft ist es, wenn ein Anpressmittel vorgesehen ist, das die erste Eingriffsfläche in Axialrichtung auf die zweite Eingriffsfläche drückt. Dadurch kann eine selbständige Einstellung der Anpresskraft und damit des übertragbaren Moments erreicht werden. Vorzugsweise weist das Anpressmittel eine Feder auf, die den ersten Eingriffsteil und den flexiblen Eingriffsteil in Axialrichtung gegeneinander vorspannt.

Eine konstruktiv besonders günstige Lösung wird dadurch erreicht, dass die Halteelemente als Bolzen ausgebildet sind, die durch kreisbogenförmige Langlöcher im Antriebsrad hindurchgeführt sind. Eine besonders günstige seitliche Führung des Antriebsrades wird erreicht, wenn das Antriebsrad an einer Seite an einer Schulter der Nockenwelle anliegt, und an der anderen Seite an Schultern von Hülsen anliegt, die von den Bolzen an die Nockenwelle gepresst werden.

Die Stromzufuhr ist in besonders günstiger Weise dadurch möglich, dass der Elektromotor über konzentrisch angeordnete Schleifringe mit Strom versorgt wird.

In der Folge wird die vorliegende Erfindung anhand des in den Figuren dargestellten Ausführungsbeispiels näher erläutert.

Fig. 1 zeigt einen Schnitt durch eine erfindungsgemäße Vorrichtung,

Fig. 2 eine Explosionsdarstellung eines allgemeinen Harmonic-Drive-Getriebes,

Fig. 3A, B, C und D Darstellungen zur Erklärung der Wirkungsweise eines Harmonic-Drive-Getriebes;

Fig. 4, 5, 6 und 6A Details einer weiteren Ausführungsvariante der Erfindung.

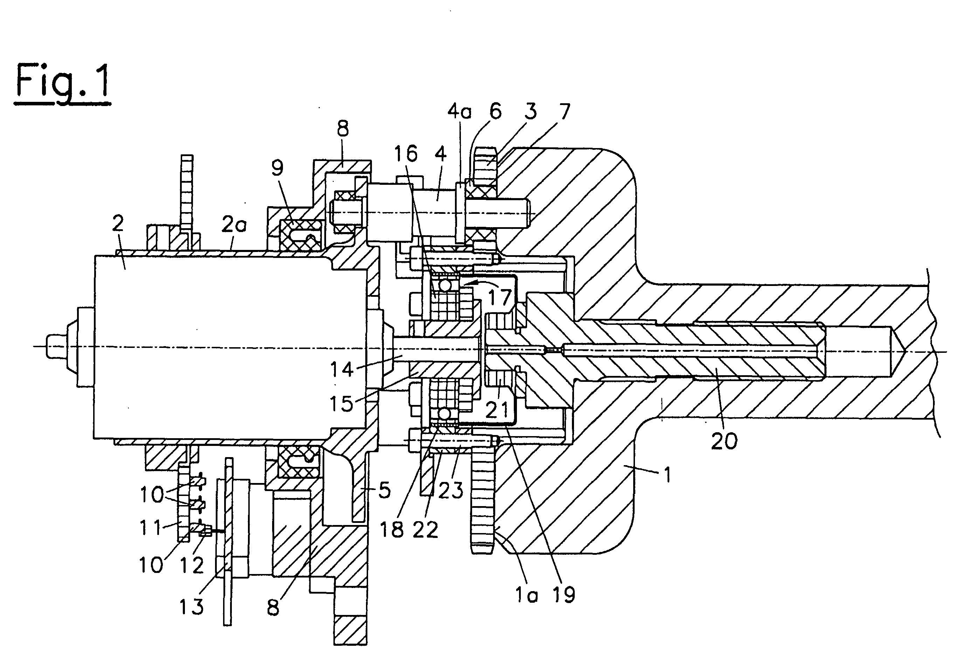

In der Fig. 1 ist eine Nockenwelle 1 teilweise dargestellt. Ein Antriebsrad 3, das als Kettenrad ausgebildet ist, dient in an sich bekannter Weise zum Antrieb der Nockenwelle 1 über einen nicht dargestellten Kettentrieb, der mit der ebenfalls nicht dargestellten Kurbelwelle der zugehörigen Brennkraftmaschine in Verbindung steht.

Ein Elektromotor 2 mit einem Gehäuse 2a dient zur Verstellung der Nockenwelle 1 gegenüber dem Antriebsrad 3, um die Ventilöffnungszeiten der Brennkraftmaschine verändern zu können.

An der Stirnseite der Nockenwelle 1 sind Bolzen 4 in regelmäßigen Winkelabständen eingeschraubt. Bei der Verwendung von beispielsweise drei Bolzen 4 betragen die Winkelabstände jeweils 120°. Die Bolzen 4 sind an ihrem Ende mit einem Flansch 5 fest verbunden, der einstückig mit dem Gehäuse 2a des Elektromotors 2 ausgebildet ist. Auf diese Weise wird der Elektromotor 2 ohne zusätzliche Lager direkt von der Nockenwelle 1 getragen. Zwischen der Schulter bzw. der Stirnfläche 1a der Nockenwelle 1 und einem Bund 4a der Bolzen 4 ist jeweils eine Hülse 6 eingespannt, die durch ein kreisbogenförmiges Langloch 7 im Antriebsrad 3 geführt ist. Auf diese Weise wird das Antriebsrad 3 seitlich mit minimalem Spiel geführt, kann sich jedoch gegenüber der Nockenwelle 1 verdrehen. Der zulässige Verdrehwinkel liegt im Bereich zwischen etwa 20° und 30° und entspricht dem zulässigen Verstellwinkel der Nockenwelle 1.

Das Gehäuse 2a des Elektromotors 2 ist gegenüber einem feststehenden Gehäuse 8 der Nockenwellenverstelleinrichtung durch eine Dichtung 9 abgedichtet, die beispielsweise als Simmerring ausgeführt ist. Der Elektromotor 2 wird über Schleifringe 10 mit Strom versorgt, die an einer sich mit dem Elektromotor 2 drehenden Scheibe 11 angeordnet sind. Die Stromzufuhr erfolgt über Schleifkontakte 12, von denen aus Gründen der Vereinfachung nur einer dargestellt ist. Die Schleifkontakte 12 sind auf einer feststehenden Halterung 13 angeordnet.

Die Welle 14 des Elektromotors 2 ist über eine Hülse 15 fest mit dem elliptisch ausgebildeten Innenring 16 eines Wälzlagers 17 verbunden. Dieser Teil eines Harmonic-Drive-Getriebes wird in der Literatur zumeist als Wave-Generator bezeichnet. Der Außenring 18 des Wälzlagers 17 ist mit einem flexiblen, außenverzahnten Zahnrad 19 verbunden, das in seiner Gesamtheit topfförmig ausgebildet ist und mit der Nockenwelle 1 in Verbindung steht. Detailliert betrachtet, ist in der Nockenwelle 1 eine Schraube 20 eingeschraubt, und das Zahnrad 19 ist zwischen dem Kopf der Schraube 20 und einer Mutter 21 kraftschlüssig eingeklemmt. Die äußere Verzahnung des Zahnrades 19 steht mit einem starren, innenverzahnten Zahnrad 22 an zwei Stellen in Eingriff, nämlich den Scheitelpunkten der durch den Wave-Generator gebildeten Ellipse. Das außenverzahnte Zahnrad ist über Schrauben 23 fest mit dem Antriebsrad 3 verbunden.

In der Folge wird der Betrieb der erfindungsgemäßen Vorrichtung erklärt. Bei nicht angetriebenem Elektromotor 2 findet keine Verstellung der Nockenwelle 1 gegenüber dem Antriebsrad 3 statt. Wenn jedoch die Welle 14 des Elektromotors 2 um eine Umdrehung gedreht wird, so kommen durch die Drehung des Wave-Generators nacheinander alle Zähne des flexiblen Zahnrades 18 mit dem innenverzahnten Zahnrad 22 in Eingriff. Wenn das außenverzahnte Zahnrad 18 beispielsweise achtundvierzig Zähne aufweist, während das innenverzahnte Zahnrad 22 fünfzig Zähne aufweist, so findet eine Relativbewegung dieser beiden Zahnräder im Ausmaß von zwei Zähnen, d. h. einer fünfundzwanzigstel Umdrehung statt. Dies entspricht auch dem Verdrehwinkel, um den sich die Nockenwelle 1 gegenüber dem Antriebsrad 3 verdreht. Durch das große Untersetzungsverhältnis ist das Moment, das vom Elektromotor 2 aufzubringen ist, relativ gering. Die Lagerung des Antriebsrades 3 ist beim erfindungsgemäßen Aufbau sehr einfach, und durch die Geometrie der Langlöcher 7 kann der zulässige Verstellwinkel der Nockenwelle 1 sehr leicht begrenzt werden.

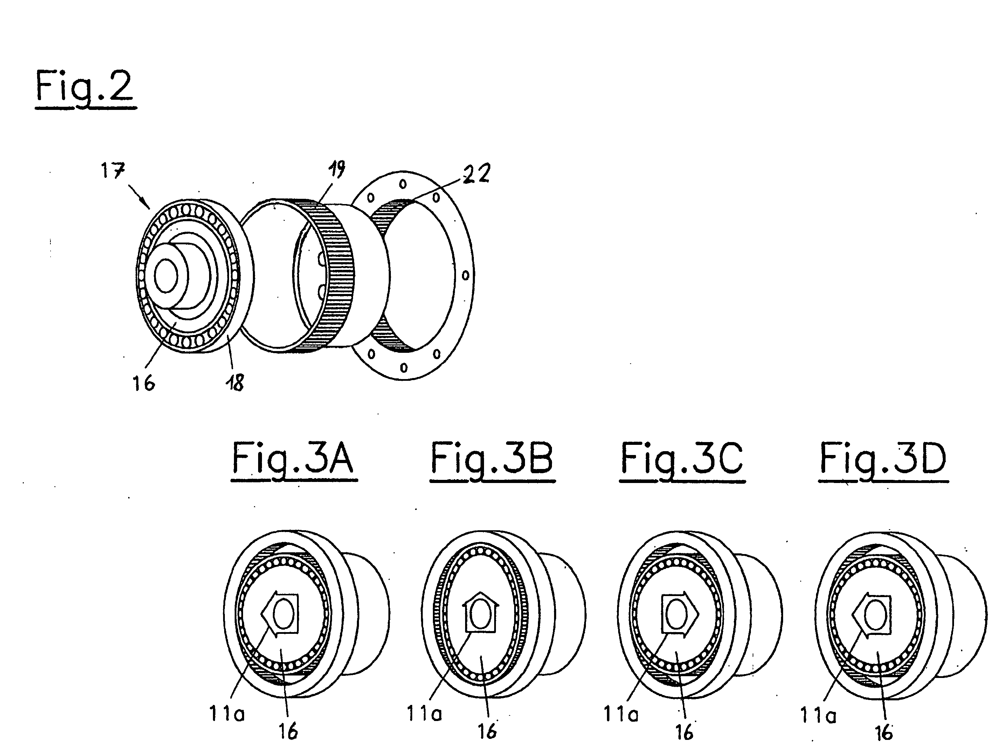

In der Fig. 2 ist in einer axonometrischen Explosionsdarstellung das Harmonic-Drive-Getriebe detailliert dargestellt. Der Innenring 16 des Wälzlagers 17 ist elliptisch mit geringfügiger Exzentrizität. Der Außenring 18 stützt sich direkt an der Innenseite eines flexiblen Zahnrades 19 ab. Dieses Zahnrad 19 steht an zwei gegenüberliegenden Punkten mit einem starren, innenverzahnten Zahnrad 22 in Eingriff, das kreisförmig ausgebildet ist.

In den Fig. 3A, B, C und D ist die Funktionsweise dieses Harmonic-Drive-Getriebes dargestellt. Der Innenring 16 ist in der Stellung der Fig. 3B gegenüber der Stellung in der Fig. 3A um 90° in Richtung des Uhrzeigersinns verdreht. Die Fig. 3C zeigt eine weitere Drehung um 90° und die Fig. 3D eine Drehung um insgesamt 360°. Zur Erleichterung der Übersicht ist in den Fig. 3A, B, C und D eine pfeilförmige Markierung 11a angebracht. Die Zähnezahl des flexiblen Zahnrades 19 ist um zwei geringer, als die Zähnezahl des innenverzahnten Zahnrades 22. Daher ergibt sich ein geringfügiger Unterschied der Winkelgeschwindigkeit des Zahnrades 19 gegenüber dem Zahnrad 22. Aus den Fig. ist ersichtlich, dass sich eine Markierung, die gedanklich mit dem Zahnrad 19 verbunden ist, im Zuge der Drehbewegung des Innenrings 16 langsam in Gegenuhrzeigerrichtung bewegt. Insgesamt entspricht der Verdrehwinkel dem Zentriwinkel von zwei Zähnen des Zahnrads 19.

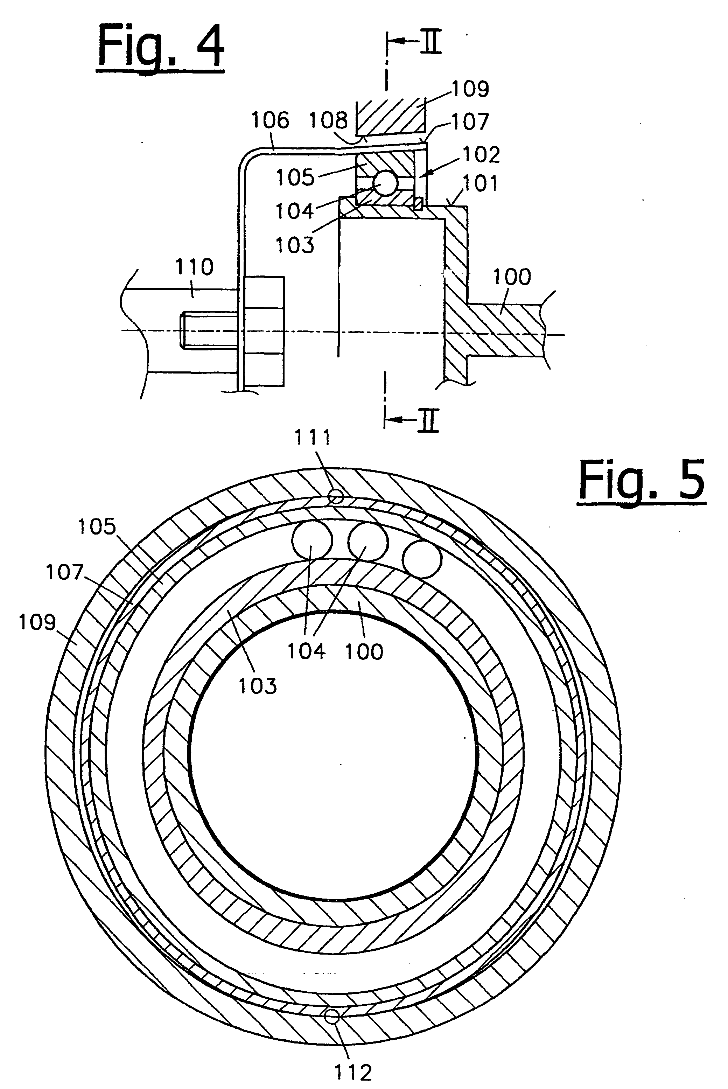

Das Getriebe der Fig. 4 besteht aus einer Antriebswelle 100, die an ihrem Ende eine Sitzfläche 101 aufweist, auf der ein Wälzlager 102 aufgekeilt ist, das als Kugellager ausgebildet ist. Das Wälzlager 102 besitzt einen Innenring 103, dessen äußerer Umfang elliptisch ausgebildet ist. Durch die Wälzkörper 104 wird der flexible Außenring 105 in eine elliptische Form gebracht. Da der äußere Umfang des Außenrings 105 leicht abgeschrägt ist, nimmt er insgesamt die Form eines elliptischen Kegels an. Am Außenring 105 liegt ein flexibler Eingriffsteil 106 an. Am äußeren Umfang des Eingriffsteils 106 ist die zweite Eingriffsfläche 107 angeordnet, die mit einer ersten Eingriffsfläche 108 in Eingriff steht, die am inneren Umfang eines ersten Eingriffsteils 109 angeordnet ist. Die erste Eingriffsfläche 109 ist kreiskegelförmig ausgebildet. Mit dem Eingriffsteil 106 steht eine Abtriebswelle 110 in Verbindung. Anstelle eines elliptischen Innenrings 103 kann auch ein dünnwandiger Innenring mit gleichmäßiger Dicke verwendet werden, der auf einer elliptischen Sitzfläche befestigt ist, so dass sich durch elastische Verformung eine elliptische Umfangsfläche ergibt.

In der Folge wird die Wirkungsweise der erfindungsgemäßen Vorrichtung näher erklärt. In der in der Fig. 5 dargestellten Lage berühren sich die Eingriffsflächen 107 und 108 in den einander gegenüberliegenden Bereichen 111 und 112. Bei einer Umdrehung der Antriebswelle 100 wandern diese Bereiche 111 und 112 entlang der ersten Eingriffsfläche 108 bis in ihre ursprüngliche Lage. Die zweite Eingriffsfläche 107 rollt dabei auf der ersten Eingriffsfläche 108 ab. Da jedoch der Umfang $U_1$ der ersten Eingriffsfläche 108 geringfügig größer ist als der Umfang $U_2$ der zweiten Eingriffsfläche 107, dreht sich der Eingriffsteil 106 geringfügig entgegen der Drehrichtung der Antriebswelle 100. Das Übersetzungsverhältnis i, definiert durch die Drehzahl der Antriebswelle gebrochen durch die Drehzahl der Abtriebswelle, entspricht dem Kehrwert der Exzentrizität $\varepsilon$, wenn diese nach folgender Gleichung definiert ist:

$$\varepsilon = (U_1 - U_2) / U_1$$

Je nach der Auswahl der verwendeten Materialien können Werte von $i = 1 / \varepsilon$ in einem Bereich von 100 bis 300 und darüber hinaus erzielt werden. Generell kann das Übersetzungsverhältnis um so größer werden, je härter die Materialien sind, die für die Eingriffsflächen 107 und 108 verwendet werden.

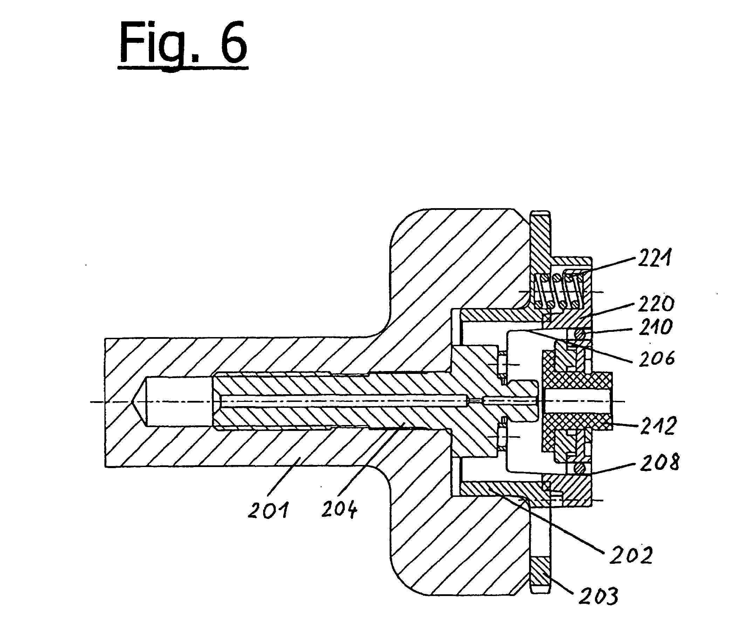

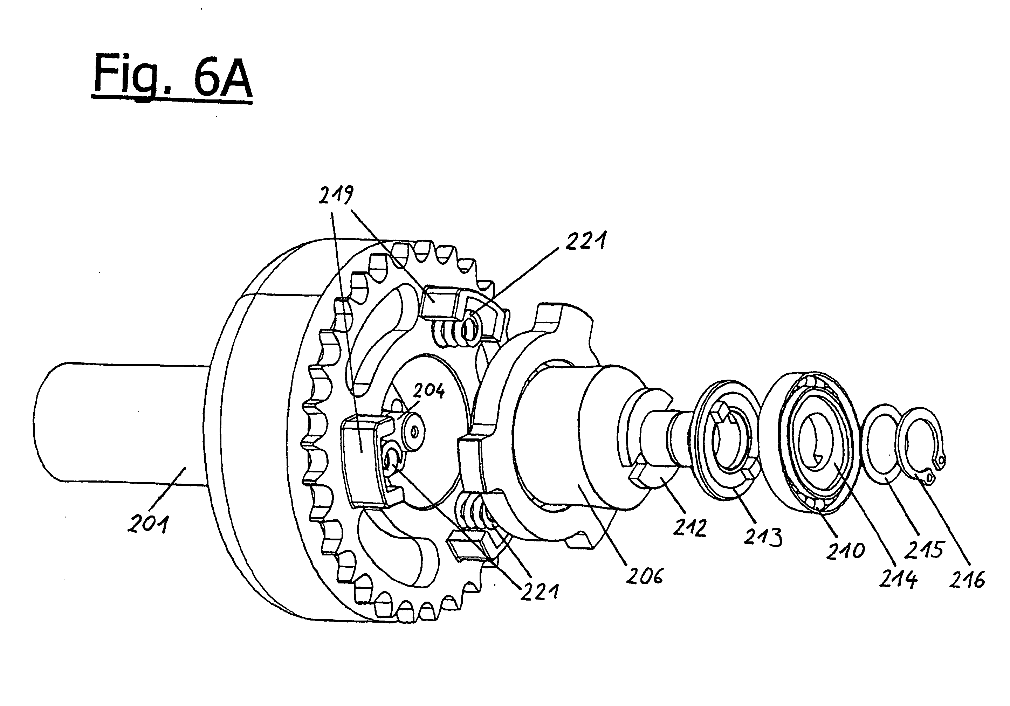

Die Fig. 6 zeigt ein erfindungsgemäßes Getriebe, das Teil einer Verstelleinrichtung für die Nockenwelle einer nicht näher dargestellten Brennkraftmaschine ist. An der Nockenwelle 201 ist mit einer Schraube 204 ein als dünnwandiger Zylinder ausgebildetes Reibrad 206 befestigt, das den flexiblen Eingriffsteil bildet. Relativ zur Nockenwelle 201 verdrehbar ist eine Hülse 202, an der ein Kettenrad 203 einstückig angeformt ist. Ein Wälzlager 210 ist elliptisch ausgebildet, so dass das Reibrad 206 mit einem Eingriffsbereich der Hülse 202 nur an zwei in Umfangsrichtung gegenüberliegenden Stellen in Eingriff steht. Der Umfang des Reibrades 206 ist geringfügig kleiner als der der Eingriffsfläche 208, die auf einem in Bezug auf die Hülse 202 in Axialrichtung verschiebbaren Ring 220 angeordnet ist und ein Hohlrad bildet. Der Innenring des Wälzlagers 210 ist fest im einem Antriebselement 212 verbunden, das mit einem nicht dargestellten Verstellmotor in Verbindung steht.

Um den erforderlichen Anpressdruck des Reibrades 206 auf dem Ring 220 dauernd zu gewährleisten, ist eine Feder 221 vorgesehen, die den Ring 220 gegenüber der Hülse 202 vorspannt.

In der Fig. 6A zeigt eine Explosionsdarstellung den Aufbau des obigen Getriebes. Der Ring 220 ist in Führungen 219 auf dem Kettenrad 203 axial verschiebbar, jedoch verdrehfest gelagert. Das Antriebselement 212 ist über einen Ring 213 mit einem Träger 214 für den Innenring des Wälzlagers 210 verbunden. Die Verbindung ist durch eine Scheibe 215 und einen Seegerring 216 gesichert.

Die erfindungsgemäße Vorrichtung besitzt einen sehr einfachen Aufbau und erfüllt alle Anforderungen, die an eine Verstellvorrichtung für eine Nockenwelle gestellt werden.

**Patentansprüche**

1. Vorrichtung zur Verstellung einer Nockenwelle (1) einer Brennkraftmaschine mit innerer Verbrennung, mit einem Antriebsrad (3) zum Antrieb der Nockenwelle (1), das koaxial zur Nockenwelle (1) angeordnet ist, sowie mit einem Elektromotor (2), der mit der Nockenwelle (1) über ein Harmonic-Drive-Getriebe in Verbindung steht, **dadurch gekennzeichnet, dass** der Elektromotor (2) ein Gehäuse (2a) aufweist, das über Halteelemente fest mit der Nockenwelle (1) verbunden ist, wobei die Halteelemente durch Ausnehmungen (7) im Antriebsrad (3) geführt sind, so dass die Ausnehmungen (7) den zulässigen Verstellbereich der Nockenwelle (1) begrenzen, und dass das Getriebe aus folgenden Bauteilen besteht: einer ersten Eingriffsfläche (108, 208), die am inneren Umfang eines ersten Eingriffsteils (22; 109) angeordnet ist, einer zweiten Eingriffsfläche (107), die am äußeren Umfang eines flexiblen Eingriffsteils (19; 106, 206) angeordnet ist und mit der ersten Eingriffsfläche (108, 208) in Eingriff steht, und einem zum ersten Eingriffsteil (22; 109) und zum flexiblen Eingriffsteil (19; 106, 206) koaxialen Treibteil, an dem ein Wälzlager (17; 102, 210) mit einem unrund ausgebildeten Innenring (16; 103) angeordnet ist, das einen flexiblen Außenring (18; 105) aufweist, der mit dem flexiblen Eingriffsteil (19; 106, 206) verbunden ist und diesen an vorzugsweise zwei Stellen gegen den ersten Eingriffsteil (22; 109) drückt, wobei die erste Eingriffsfläche (108, 208, 308) des ersten Eingriffsteils (22; 109) mit der zweiten Eingriffsfläche (107) des flexiblen Eingriffsteils (19; 106, 206) in einer reibschlüssigen oder als Verzahnung ausgebildeten Verbindung steht.

2. Vorrichtung nach Anspruch 1, **dadurch gekennzeichnet, dass** die als Verzahnung ausgebildete Verbindung als Harmonic-Drive-Getriebe ausgebildet ist, das aus einem Wälzlager (17) mit einem elliptischen Innenring (16), einem auf diesem Wälzlager (17) angeordneten flexiblen außenverzahnten Zahnrad (19) und einem starren innenverzahnten Zahnrad (22), das mit dem außenverzahnten Zahnrad (19) in Eingriff steht, zusammengesetzt ist.

3. Vorrichtung nach Anspruch 2, **dadurch gekennzeichnet, dass** der Elektromotor (2) eine Welle (14) aufweist, die direkt mit dem elliptischen Innenring (16) des Wälzlagers (17) verbunden ist.

4. Vorrichtung nach einem der Ansprüche 1 bis 3, **dadurch gekennzeichnet, dass** das flexible Zahnrad (19) des Harmonic-Drive-Getriebes direkt mit der Nockenwelle (1) verbunden ist.

5. Vorrichtung nach einem der Ansprüche 1 bis 4, **dadurch gekennzeichnet, dass** das innenverzahnte Zahnrad (22) des Harmonic-Drive-Getriebes mit dem Antriebsrad (3) verbunden ist.

6. Vorrichtung nach Anspruch 1, **dadurch gekennzeichnet, dass** der Innenring (103) des Wälzlagers (102, 210) im Querschnitt elliptisch ausgebildet ist. oder

7. Vorrichtung nach einem der Ansprüche 1 oder 6, **dadurch gekennzeichnet, dass** die erste Eingriffsfläche (108, 208, 308) des ersten Eingriffsteils (109) mit der zweiten Eingriffsfläche (107) des flexiblen Eingriffsteils (106, 206) in einer reibschlüssigen Verbindung steht und dass ein vorzugsweise als Feder (221) ausgebildetes Anpressmittel vorgesehen ist, das die erste Eingriffsfläche (208) in Axialrichtung auf die zweite Eingriffsfläche drückt.

8. Vorrichtung nach einem der Ansprüche 1 bis 7, **dadurch gekennzeichnet, dass** die Halteelemente als Bolzen (4) ausgebildet sind, die durch kreisbogenförmige Langlöcher (7) im Antriebsrad (3) hindurchgeführt sind.

9. Vorrichtung nach Anspruch 8, **dadurch gekennzeichnet, dass** das Antriebsrad (3) an einer Seite an einer Schulter (1a) der Nockenwelle (1) anliegt, und an der anderen Seite an Schultern von Hülsen (6) anliegt, die von den Bolzen (4) an die Nockenwelle (1) gepresst werden.

10. Vorrichtung nach einem der Ansprüche 1 bis 9, **dadurch gekennzeichnet, dass** der Elektromotor (2) über konzentrisch angeordnete Schleifringe (10) mit Strom versorgt wird.

**Claims**

1. A device for adjusting the phase angle of a camshaft (1) of an internal combustion engine with a drive gear (3) for driving a camshaft (1) accommodated in a coaxial arrangement relative to the camshaft (1) and with an electric motor (2) communicating with the camshaft (1) via a Harmonic Drive, **characterized in that** the electric motor (2) is provided with a housing (2a) which is rigidly connected to the camshaft (1) via retaining elements, wherein said retaining elements are guided through recesses (7) in the drive gear (3) so that the recesses (7) restrict the allowable adjusting range of the camshaft (1) and that the set of gears consists of the following component parts: a first plane of action (108, 208) arranged on the inner periphery of a first engaging part (22; 109), a second plane of action (107) arranged on the outer periphery of a flexible engaging part (19; 106, 206) and engaging the first plane of action (108, 208) and a driving member arranged coaxially with the first engaging part (22; 109) and with the flexible engaging part (19; 106, 206), a rolling bearing (17; 102, 210) provided with a non circular inner ring (16; 103) being accommodated on said driving member and having a flexible outer ring (18; 105) connected to the flexible engaging part (19; 106, 206) and pushing it by preferably two points against the first engaging part (22; 109), wherein the first plane of action (108, 208, 308) of the first engaging part (22; 109) frictionally or meshingly engages the second plane of action (107) of the flexible engaging part (19; 106, 206).

2. The device according to claim 1, **characterized in that** the mesh is configured to be a Harmonic Drive having a rolling bearing (17) with an elliptical inner ring (16), an externally toothed, flexible gear (19) arranged on said rolling bearing (17) and a rigid, internally toothed gear (22) engaging the externally toothed gear (19).

3. The device according to claim 2, **characterized in that** the electric motor (2) is provided with a shaft (14) that is directly connected to the elliptical inner ring (16) of the rolling bearing (17).

4. The device according to one of the claims 1 through 3, **characterized in that** the flexible gear (19) of the Harmonic Drive is directly connected to the camshaft (1).

5. The device according to one of the claims 1 through 4, **characterized in that** the internally toothed gear (22) of the Harmonic Drive is connected to the drive gear (3).

6. The device according to claim 1, **characterized in that** the inner ring (103) of the rolling bearing (102, 210) is elliptical in cross section.

7. The device according to one of the claims 1 or 6, **characterized in that** the first plane of action (108, 208, 308) of the first engaging part (109) frictionally engages the second plane of action (107) of the flexible engaging part (106, 206) and that a pressure means, which is preferably configured as a spring (221), is provided, said pressure means pressing the first plane of action (208) in the axial direction against the second plane of action.

8. The device according to one of the claims 1 through 7, **characterized in that** the retaining elements are configured as bolts (4) which are guided through oblong holes (7) in the form of circular arcs provided in the drive gear (3).

9. The device according to claim 8, **characterized in that** the drive gear (3) abuts with one side on a shoulder (1a) of the camshaft (1) and with its other side on shoulders of sleeves (6) that are pressed against the camshaft (1) by the bolts (4).

10. The device according to one of the claims 1 through 9, **characterized in that** the electric motor (2) is supplied with current via concentrically arranged slip rings (10).

**Revendications**

1. Dispositif d'actionnement d'un arbre à cames (1) d'un moteur à explosion / à combustion interne, avec une roue d'entraînement (3) pour entraîner un arbre à cames (1), qui est disposée de manière coaxiale par rapport à l'arbre à cames (1), ainsi qu'avec un moteur électrique (2) qui est en prise avec l'arbre à cames (1) par une transmission à démultiplicateur harmonique, <u>**caractérisé en ce que**</u> le moteur électrique (2) a un carter (2a) qui est solidaire de l'arbre à cames (1) par l'intermédiaire d'éléments de retenue, les éléments de retenue étant logés dans des évidements (7) dans la roue d'entraînement (3) de manière à ce que les évidements (7) limitent la plage de déplacement possible de l'arbre à cames (1) et **en ce que** la transmission est constituée par les éléments suivants : une première surface d'engagement (108, 208) qui se trouve sur la périphérie interne d'un premier élément d'engagement (22 ; 109), une seconde surface d'engagement (107) qui se trouve sur la périphérie externe d'un élément d'engagement flexible (19 ; 106, 206) et qui est en prise avec la première surface d'engagement (108, 208) et un élément d'entraînement coaxial avec le premier élément d'engagement (22 ; 109) et avec l'élément d'engagement flexible (19 ; 106, 206), sur lequel est agencé un palier à roulement (17 ; 102, 210) avec un anneau interne réalisé avec une forme qui n'est pas ronde (16 ; 103), qui présente un anneau flexible externe (18 ; 105), qui est en prise avec l'élément d'engagement flexible (19 ; 106, 206) et qui sollicite celui-ci, de préférence en deux emplacements, contre le premier élément d'engagement (22; 109), la première surface d'engagement (108, 208, 308) du premier élément d'engagement (22 ; 109) étant en prise avec la seconde surface d'engagement (107) de l'élément d'engagement flexible (19 ; 106, 206) par friction ou par engrenage.

2. Dispositif selon la revendication 1, **caractérisé en ce que** la connexion réalisée sous la forme d'un entraînement par engrenage est une transmission à démultiplicateur harmonique qui est constituée par un palier à roulement (17) avec un anneau interne elliptique (16), une roue dentée flexible (19) à denture externe agencée sur ce palier à roulement (17) et une roue dentée rigide (22) à denture interne en prise avec la roue dentée (19) à denture externe.

3. Dispositif selon la revendication 2, **caractérisé en ce que** le moteur électrique (2) a un arbre (14) qui est directement en prise avec l'anneau interne elliptique (16) du palier à roulement (17).

4. Dispositif selon l'une des revendications 1 à 3, **caractérisé en ce que** la roue dentée flexible (19) de la transmission à démultiplicateur harmonique est directement en prise avec l'arbre à cames (1).

5. Dispositif selon l'une des revendications 1 à 4, **caractérisé en ce que** la roue dentée (22) à denture interne de la transmission à démultiplication harmonique est en prise avec la roue d'entraînement (3).

6. Dispositif selon la revendication 1, **caractérisé en ce que** l'anneau interne (103) du palier à roulement (102, 210) est réalisé avec une forme elliptique, en coupe transversale.

7. Dispositif selon la revendication 1 ou la revendication 6. **caractérisé en ce que** la première surface d'engagement (108, 208, 308) du premier élément d'engagement (109) est en prise par friction avec la seconde surface d'engagement (107) de l'élément d'engagement flexible (106, 206) et **en ce que** l'on prévoit un moyen de sollicitation, réalisé de préférence sous la forme d'un ressort(221), qui sollicite la première surface d'engagement (208) dans la direction axiale contre la seconde surface d'engagement.

8. Dispositif selon l'une des revendications 1 à 7, **caractérisé en ce que** les éléments de retenue sont réalisés sous la forme de boulons (4) qui traversent des trous allongés (7) en forme d'arcs de cercle, dans la roue d'entraînement (3).

9. Dispositif selon la revendication 8, **caractérisé en ce que** la roue d'entraînement (3) est en appui par un côté sur un épaulement (1a) de l'arbre à cames (1) et par l'autre côté, sur des épaulements de manchons (6) qui sont sollicités par les boulons (4) contre l'arbre à cames (1).

10. Dispositif selon l'une des revendications 1 à 9, **caractérisé en ce que** le moteur électrique (2) est alimenté en courant par des bagues collectrices (10) disposées de manière concentrique.

Fig.1

EP 1 043 482 B1

Fig.2

Fig.3A

Fig.3B

Fig.3C

Fig.3D

# Fig. 4

# Fig. 5

# Fig. 6

221
220
210
206
212
208
201 204
202
203

Fig. 6A